# EUROPEAN PATENT APPLICATION

(11) **EP 4 575 815 A1**
(43) Date of publication of application: **25.06.2025**
(21) Application number: 24220406.3
(22) Date of filing: 17.12.2024
(51) Int. Cl.: G06F 13/362, G06F 13/372, H04L 12/40, G06F 13/42, G06F 11/16

(54) **COMMUNICATION METHOD, CONTROL DEVICE, COMPENSATION SIGNAL GENERATING DEVICE, AND CONSUMABLE**

(30) Priority: 22.12.2023 CN 202311794660
(71) Applicant: Zhuhai Pantum Electronics Co., Ltd., Zhuhai, Guangdong (CN)
(72) Inventor: TIAN, Yi, Zhuhai, Guangdong (CN); GUO, Hangbiao, Zhuhai, Guangdong (CN)
(74) Representative: Sun, Yiming

(57) **Abstract**

The present disclosure provides a communication method, a control device, a compensation signal generation control method and a device thereof, and a consumable. The communication method includes: detecting a target event on the communication bus, the communication bus being configured to be electrically connected to a first chip and at least one second chip, the target event including a compensation signal, and the compensation signal is used to indicate that some or all of the at least one second chip fail to generate a target event corresponding to the second chip on the communication bus as expected; determining whether the detected target event meets expectations of the first chip based on the compensation signal; and when it is determined that the detected target event meets the expectations of the first chip, generating a target event corresponding to the first chip on the communication bus. The remaining chips can generate their respective corresponding target events based on the compensation signal to prevent the remaining chips after the abnormal chip from being unable to detect normally or causing the system to crush.

## Description

### FIELD OF THE DISCLOSURE

The present application relates to the field of communication technology, and specifically to a communication method, a control device, a compensation signal generating device, and a consumable.

### BACKGROUND

To enrich the features of a host device, a host device is often used in combination with some peripheral accessories. Each accessory usually includes a chip, and the chip of each accessory is connected to the host device through a same communication bus. In actual applications, the accessory corresponding to a chip may be unavailable due to chip abnormalities (e.g., poor contact or no contact, etc.), thereby affecting the operation of the host device. Therefore, before the host device runs, it is usually necessary to test a chip to ensure that the accessory corresponding to the chip can be used normally.

In the existing technology, a chip detection scheme is as follows: after a host device is powered on, a clock synchronization signal is generated, and the clock synchronization signal is transmitted to each chip through a communication bus; each chip generates a low-level signal in sequence after receiving the clock synchronization signal; the host device determines whether a chip is abnormal based on the low-level signal output by the chip. To avoid signal conflicts, each chip determines whether to output a low-level signal based on whether the number of low-level signals detected reaches a predefined value. For example, after receiving the clock synchronization signal, a first chip outputs a first low-level signal; after receiving the clock synchronization signal and one low-level signal, the second chip outputs a second low-level signal; after receiving the clock synchronization signal and two low-level signals, a third chip outputs a third low-level signal; after receiving the clock synchronization signal and three low-level signals, a fourth chip outputs a fourth low-level signal; and so on, which will not be repeated here.

However, in the above detection scheme, if there is an abnormal chip, the remaining chips after the abnormal chip will not be detected normally, and it will be impossible to accurately detect which chips are abnormal or cause the system to crash. For example, if the second chip is abnormal, the second chip cannot output its corresponding second low-level signal. Further, since the remaining chips after the second chip cannot detect the corresponding number of low-level signals on the communication bus, the remaining chips after the second chip cannot output the corresponding low-level signals normally.

It should be noted that the information disclosed in the background technology section of the present disclosure is merely intended to deepen the understanding of the general background technology of the present disclosure, and should not be considered as an admission or suggestion in any form that the information constitutes existing technology already known to those skilled in the art.

### SUMMARY

The present disclosure provides a communication method, a control device, a compensation signal generating control device, and a consumable, so as to solve the problem in the existing technology that if there is an abnormal chip, the remaining chips after the abnormal chip will not be detected normally and thus it is impossible to accurately detect which chips are abnormal or cause the system to crash.

A first aspect of the present disclosure provides a communication method, and the method includes: detecting a target event on the communication bus, the communication bus being configured to be electrically connected to a first chip and at least one second chip, the target event including a compensation signal, the compensation signal being used to indicate that some or all of the at least one second chip fail to generate a target event corresponding to the second chip on the communication bus as expected; determining whether the detected target event meets expectations of the first chip based on the compensation signal; and when it is determined that the detected target event meets the expectations of the first chip, generating a target event corresponding to the first chip on the communication bus.

A second aspect of the present disclosure provides a control device, and the control device includes: a detection unit, configured to detect a target event on a communication bus, the communication bus being electrically connected to a first chip and at least one second chip, the target event including a compensation signal, the compensation signal being configured to indicate that some or all of the at least one second chip fail to generate a target event corresponding to the second chip on the communication bus as expected; a determination unit, configured to determine whether the detected target event meets expectations of the first chip based on the compensation signal; and a signal generation unit, configured to generate a target event corresponding to the first chip on the communication bus when it is determined that the detected target event meets the expectations of the first chip.

A third aspect of the present disclosure provides a communication method, and the method includes: detecting a target event on a communication bus; determining whether there is at least one chip that fails to generate a target event corresponding to a chip on the communication bus as expected based on the detected target event; and when it is determined that at least one chip fails to generate a target event corresponding to the chip on the communication bus as expected, generating a corresponding compensation signal on the communication bus.

A fourth aspect of the present disclosure provides a compensation signal generating device, and the compensation signal generating device includes: a detection unit, configured to detect a target event on a communication bus; a determination unit, configured to determine, based on the detected target event, whether there is at least one chip that fails to generate a target event corresponding to a chip on the communication bus as expected; and a signal generation unit, configured to generate a corresponding compensation signal on the communication bus when it is determined that there is at least one chip that fails to generate a target event corresponding to the chip on the communication bus as expected.

A fifth aspect of the present disclosure provides a consumable, and the consumable includes: a housing, a developer accommodating portion, located in the housing, for accommodating a developer, and a control device as described in the second aspect or the compensation signal generating device as described in the fourth aspect.

A sixth aspect of the present disclosure provides a consumable, and the consumable includes: a photosensitive drum; a charging roller, used for charging the photosensitive drum; and a control device as described in the second aspect or a compensation signal generating device as described in the fourth aspect.

In the embodiment of the present disclosure, if it is detected that a chip does not generate its corresponding target event on the communication bus as expected, a compensation signal is generated on the communication bus. The remaining chips can generate their own corresponding target events based on the compensation signal to prevent the remaining chips after the abnormal chip from being unable to detect normally or causing the system to crash.

### BRIEF DESCRIPTION OF THE DRAWINGS

To more clearly illustrate the technical solutions of the embodiments of the present disclosure, the drawings essential for understanding the embodiments will be briefly introduced below. Apparently, the drawings described below are merely some embodiments of the present disclosure. For a person skilled in the art, other drawings can be obtained based on these drawings without creative efforts.
FIG. 1 is a structural block diagram of a communication system in accordance with an embodiment of the present disclosure;
FIG. 2 is a structural block diagram of another communication system in accordance with an embodiment of the present disclosure;
FIG. 3 is a structural block diagram of another communication system in accordance with an embodiment of the present disclosure;
FIG. 4 is a waveform diagram of a communication bus in accordance with an embodiment of the present disclosure;
FIG. 5 is a waveform diagram of another communication bus in accordance with an embodiment of the present disclosure;
FIG. 6A is a structural block diagram of another communication system in accordance with an embodiment of the present disclosure;
FIG. 6B is a structural block diagram of another communication system in accordance with an embodiment of the present disclosure;
FIG. 7 is a structural block diagram of a first chip in accordance with an embodiment of the present disclosure;
FIG. 8 is a waveform diagram of another communication bus in accordance with an embodiment of the present disclosure;
FIG. 9 is a waveform diagram of another communication bus in accordance with an embodiment of the present disclosure;
FIG. 10 is a structural block diagram of a host device in accordance with an embodiment of the present disclosure;
FIG. 11 is a flow chart of a communication method in accordance with an embodiment of the present disclosure;
FIG. 12 is a flow chart of another communication method in accordance with an embodiment of the present disclosure;
FIG. 13 is a schematic structural diagram of a consumable in accordance with an embodiment of the present disclosure;
FIG. 14 is a schematic structural diagram of another consumable in accordance with an embodiment of the present disclosure;
FIG. 15 is a schematic structural diagram of another consumable in accordance with an embodiment of the present disclosure; and
FIG. 16 is a schematic structural diagram of another consumable in accordance with an embodiment of the present disclosure.

### DETAILED DESCRIPTION

To better understand the technical solutions of the present disclosure, the embodiments of the present disclosure are described in detail hereinafter with reference to the accompanying drawings.

It should be noted that the described embodiments are merely part of the embodiments of the present disclosure, rather than all the embodiments. Based on the embodiments in the present disclosure, other embodiments obtained by a person skilled in the art without creative efforts are within the scope of protection of the present disclosure.

The terms used in the embodiments of the present disclosure are merely for the purpose of describing specific embodiments and are not intended to limit the present disclosure. The singular forms "a ", "said" and "the" used in the embodiments of the present disclosure and the appended claims are also intended to include plural forms, unless the context clearly indicates other meanings.

It should be noted that the term "and/or" used in this article is merely a description of the association relationship of associated objects, indicating that there can be three relationships. For example, A and/or B can represent: A exists alone, A and B exist at the same time, and B exists alone. In addition, the character "/" in this article generally indicates that the associated objects therebefore and thereafter are in an "or" relationship.

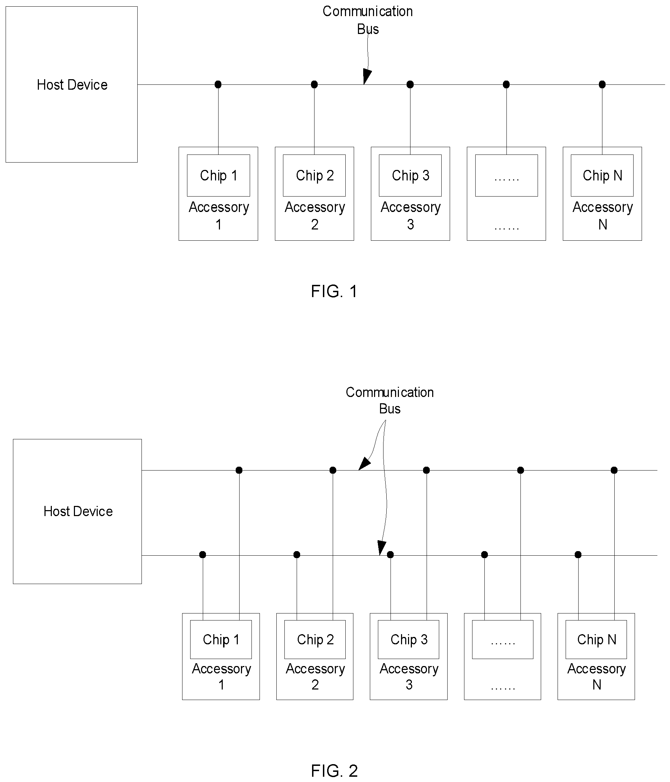

FIG. 1 is a structural block diagram of a communication system in accordance with an embodiment of the present disclosure. As shown in FIG. 1, the communication system includes a host device and N accessories (i.e., accessory 1-accessory N), N≥2. Each accessory includes a chip, and the chip is communicatively connected to the host device through a communication bus, so as to realize data transmission between the host device and the chip. Specifically, the communication bus can be an electrical, optical, infrared or other appropriate information transmission path arranged between the host device and the chip. It should also be noted that there can be multiple chips mounted on a single accessory, and thus, the communication system can also include merely one accessory. The embodiments of the present disclosure do not limit the number of accessories, as long as the number of chips arranged corresponding to the accessories is at least 2.

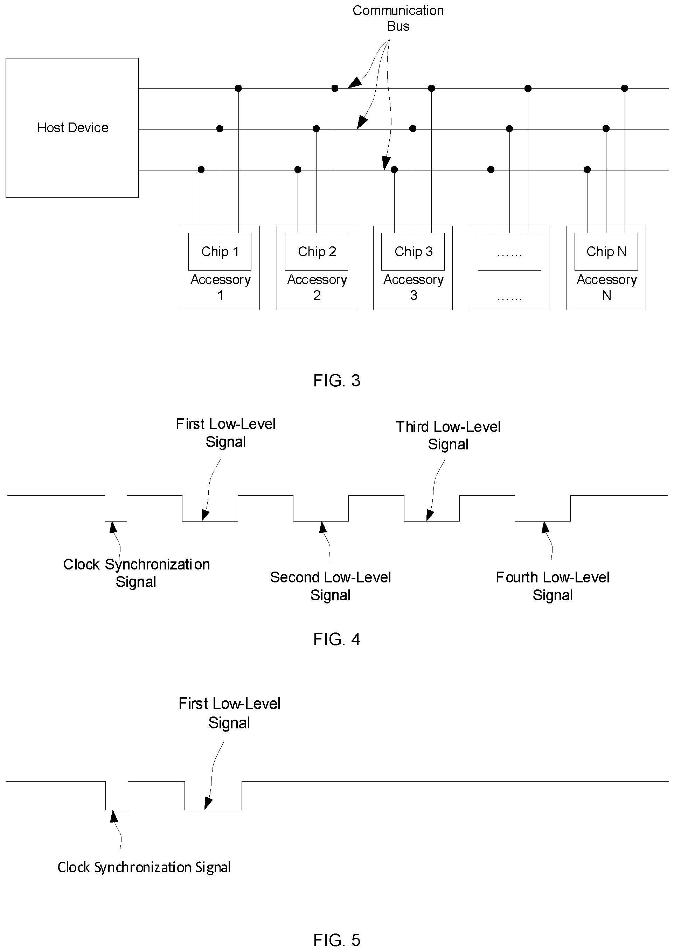

In some embodiments, the communication bus is a single-wire communication bus. That is, the host device and the chip transmit data through one wire. It should be noted that when the communication bus is a single-wire communication bus, the communication protocol between the host device and the chip should be a communication protocol that meets the single-wire requirements. In some embodiments, the communication bus is a multi-wire communication bus. That is, the host device and the chip transmit data through multiple wires. It should be noted that when the communication bus is a multi-wire communication bus, the communication protocol between the host device and the chip should be a communication protocol that meets the multi-wire requirements. Exemplarily, in the communication system shown in FIG. 2, the communication bus is a 2-wire communication bus, and in the communication system shown in FIG. 3, the communication bus is a 3- wire communication bus. Apparently, those skilled in the art can also design other wire communication buses according to actual needs, which is not limited in the present disclosure. It should also be noted that the number of communication buses specified in the above merely limits the number of communication data such as data signals, clock signals, etc. used to transmit between the host device and the chip. Those skilled in the art can set the way in which the chip obtains power signals and ground signals according to actual needs, which is not limited in the present disclosure.

In some embodiments, the host device is an image forming device, and the accessories are consumables. Exemplarily, the image forming device may be an inkjet printer, a laser printer, a 3D printer, a label printer, a dot matrix printer, etc. Correspondingly, a consumable may be an ink cartridge, a toner cartridge, a toner cartridge, a toner cartridge, a ribbon cartridge, etc., which are containers for accommodating recording materials.

When the accessory is a consumable, the chip is a consumable chip mounted on the accessory. The consumable chip is an electronic device with a storage function. In the consumable chip, information about the consumables is stored, such as the manufacturer, type, color, capacity and usage of recording materials (e.g., toner, ink), etc. Therefore, when a user mounts a consumable into the host device, the information stored in the consumable chip can be provided to the host device so that the host device can know the basic information of the consumable. In addition, during the image forming operation, the host device can also write the update information of the consumable (e.g., the usage of the recording material) into the consumable chip. Here, the consumable chip includes a board and contacts interconnected with the board, where the contacts included on the chip are used to electrically connect to the host device.

In some embodiments, a consumable is of a split structure, including a drum cartridge and a developer cartridge that are detachable from each other, where the drum cartridge includes a photosensitive drum and a charging roller, and the developer cartridge includes a developer container, a developer roller, and a developer conveying element. Apparently, the consumable may also be of an integrated structure, for example, the consumable includes a developer container, a developer roller, a developer conveying element, a photosensitive drum, a charging roller, etc.

Further, a consumable may also include merely a housing and a developer accommodating portion. It should also be noted that a consumable may also be the developer cartridge or drum cartridge. The developer accommodating portion is used to accommodate a developer such as toner, and the developer conveying element is a component such as a powder feeding roller, a powder feeding screw, etc., for stirring and/or conveying toner. Apparently, the developer cartridge may also include merely the developer accommodating portion, which is not limited here. Alternatively, the developer cartridge may also include merely the developer accommodating portion and the developer conveying element, which is not limited here.

In one embodiment, a consumable may also include a powder cartridge and/or an imaging component, where the powder cartridge is used to deliver toner to the imaging component when the toner contained in the imaging component is insufficient so that the image forming device forms an image based on the toner delivered by the imaging component. When the consumable is a powder cartridge, the consumable may merely include a housing and a developer accommodating portion, or may include a housing, a developer accommodating portion, and a developer conveying element, which is not limited in the present disclosure. When the consumable is an imaging component, the consumable may include a housing, a developer accommodating portion, a developer conveying unit, a charging roller, a photosensitive drum, etc., which is not limited in the present disclosure.

It should be noted that a consumable described in the embodiments of the present disclosure may also include other components, parts, units (such as paper boxes, etc.) in the image forming device that are easily damaged and need to be replaced, which also belong to the technical solutions corresponding to the consumables protected by the present disclosure.

In some embodiments, the host device may be a computer. Accordingly, the accessory may be a peripheral device or equipment of the computer. Alternatively, the host device may be a mobile terminal (e.g., a mobile phone, tablet computer, PDA, etc.). Accordingly, the accessory may be an attachment or peripheral device or equipment of the mobile terminal, such as a lithium battery chip, a wearable device chip, etc., which is not specifically limited in the embodiments of the present disclosure.

In some embodiments, the host device and a chip are electrically connected by contact pins, contacts or springs to establish a communication bus. However, in actual applications, due to poor or no contact between the host device and the chip, the accessory corresponding to the chip may be unavailable. Specifically, the host device and the chip may include the following three connection states.

In a first situation, the host device and the chip are in good contact. At this moment, a current loop is formed between the host device and the chip, and the host device and the chip can communicate stably. In other words, when the contact between the host device and the chip is good, the communication state between the host device and the chip is stable, and data transmission between the host device and the chip will not cause data transmission failures such as data distortion and data transmission interruption.

In a second scenario, the host device is in contact with the chip, but there is a problem of poor contact. In this situation, although a current loop can be formed between the host device and the chip, the current value of the current loop is less than the predefined value, resulting in an unstable communication state between the host device and the chip. In other words, data transmission between the host device and the chip may cause data transmission failures such as data distortion and data transmission interruption.

In a third situation, the contact between the host device and the chip is completely disconnected. In this situation, the host device and the chip cannot communicate at all.

To simplify the description, in some embodiments, the second and third situations described above can be classified as one connection state. That is, the host device and the chip are in a state where stable communication is not possible.

In actual applications, a chip may be abnormal, which may cause the corresponding accessory of the chip to be unavailable, thereby affecting the operation of the host device. Therefore, before the host device runs, it is usually necessary to test the chip to ensure that the corresponding accessory of the chip can be used normally.

In the existing technology, a chip detection scheme is as follows: after the host device is powered on, a clock synchronization signal is generated, and the clock synchronization signal is transmitted to each chip through a communication bus; after each chip receives the clock synchronization signal, it generates a low-level signal in sequence; the host device determines whether the chip is abnormal based on the low-level signal output by the chip. To avoid signal conflicts, each chip determines whether to output a low-level signal based on whether the number of low-level signals detected reaches a predefined value.

Exemplarily, the host device is connected to four chips through a communication bus, namely chip 1, chip 2, chip 3 and chip 4. If all four chips are normal, the waveform of the signal generated by the host device and the chips on the communication bus is shown in FIG. 4. Specifically, after the host device is powered on, a clock synchronization signal is generated on the communication bus, and the clock synchronization signal is a rising edge or falling edge generated by the host device on the communication bus. After receiving the clock synchronization signal, chip 1 outputs a first low-level signal; after receiving the clock synchronization signal and one low-level signal, chip 2 outputs a second low-level signal; after receiving the clock synchronization signal and two low-level signals, chip 3 outputs a third low-level signal; after receiving the clock synchronization signal and three low-level signals, chip 4 outputs a fourth low-level signal.

On the contrary, when there is an abnormal chip among the four chips, for example, chip 2 is abnormal, the waveform of the signal generated by the host device and the chips on the communication bus is shown in FIG. 5. Specifically, after the host device is powered on, a clock synchronization signal is generated on the communication bus. After receiving the clock synchronization signal, chip 1 outputs a first low-level signal. Due to the abnormality of chip 2, chip 2 cannot output its corresponding second low-level signal. Further, since chip 3 cannot receive two low-level signals, chip 3 is always in a state of waiting to receive the second low-level signal, and thus it will not output its corresponding third low-level signal. Similarly, chip 4 will not output its corresponding fourth low-level signal. In other words, if there is an abnormal chip, the remaining chips after the abnormal chip cannot be detected normally, and it is impossible to accurately detect which chips are abnormal or cause the system to crash.

In view of the above problems, the embodiments of the present disclosure provide a chip detection solution. If it is detected that a chip does not generate its corresponding target event on the communication bus as expected, a compensation signal is generated on the communication bus. The remaining chips can generate their own corresponding target events based on the compensation signal to prevent the remaining chips after the abnormal chip from being unable to be detected normally or causing the system to crash.

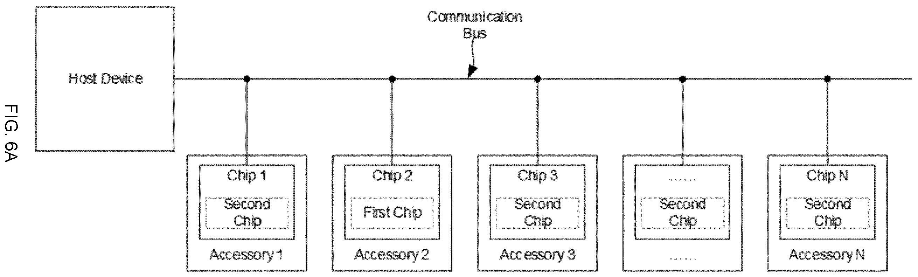

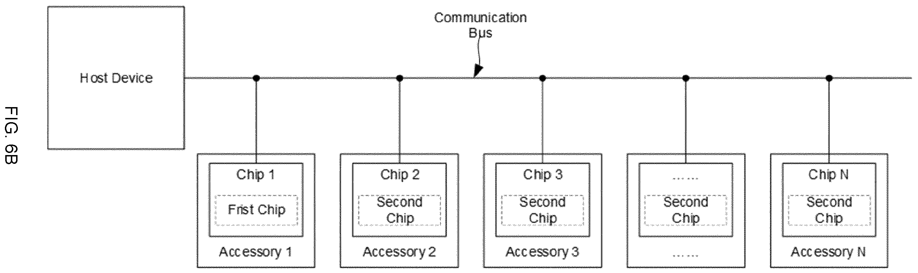

To facilitate understanding, the technical solutions provided in the embodiments of the present disclosure are described in detail from the host device side and a chip side respectively. Here, for the convenience of description, any chip in the communication system is referred to as a "first chip", and the technical solutions of the chip side are introduced from the perspective of the first chip. To distinguish from other chips in the communication system, other chips in the communication bus are referred to as "second chips". Exemplarily, if chip 2 in FIG. 1 is referred to as the first chip, the remaining chips (chip 1, chip 3-chip N) are all second chips, as shown in FIG. 6A; or, if chip 1 in FIG. 1 is referred to as the first chip, the remaining chips (chip 2-chip N) are all second chips, as shown in FIG. 6B.

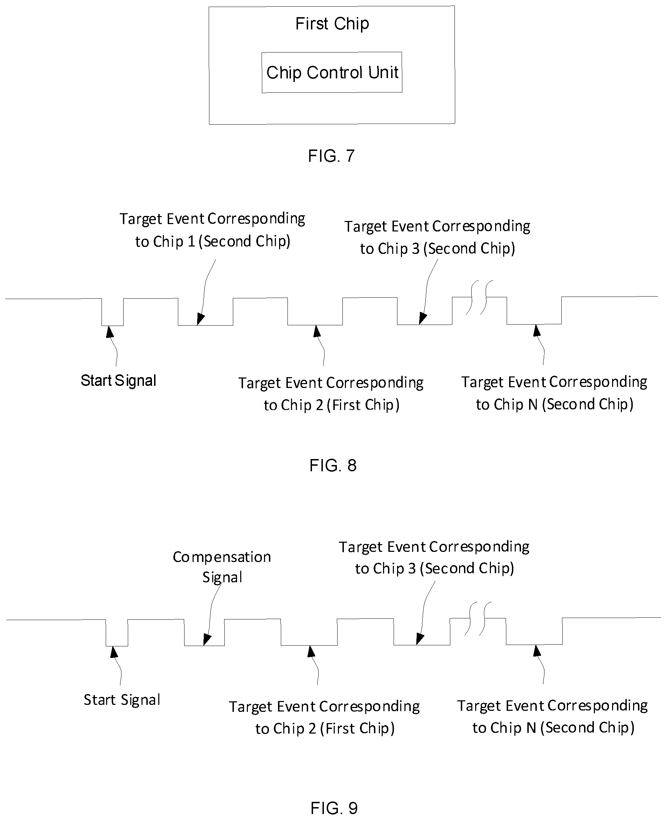

FIG. 7 is a block diagram of a first chip in accordance with an embodiment of the present disclosure. The first chip is configured to communicate with a host device and at least one second chip via a communication bus. As shown in FIG. 7, the first chip includes a chip control unit(e.g. Microcontroller Unit (MCU)), which is configured to detect a target event on the communication bus. If the target event detected on the communication bus meets the expectations of the first chip, a target event corresponding to the first chip is generated on the communication bus.

It should also be noted that for a target event generated on the communication bus by any device interconnected through the communication bus, other devices electrically connected to the device through the communication bus can detect it on the communication bus. The target event generated by any device on the communication bus can be a start signal generated by the host device, a target event corresponding to the second chip, a compensation signal, etc. The compensation signal on the communication bus can be a compensation signal actually generated by the host device or a second chip on the communication bus, or can be an indication message indicating that there is a chip that does not generate the target event corresponding to the chip on the communication bus as expected. The embodiments of the present disclosure do not limit the target event detected by each device on the communication bus. That is, a target event detected by each device on the communication bus can include a signal generated by itself on the communication bus, and can also include signals generated by other devices on the communication bus, and can also include various indication messages reflected on the communication bus, such as indicating that a chip does not output the target event corresponding to the chip on the communication bus as expected, or indicating that a chip has output the target event corresponding to the chip on the communication bus as expected.

Further, the "target event corresponding to the chip" described in the embodiments of the present disclosure specifically refers to the signal generated by the chip itself on the communication bus. When a chip generates the target event corresponding to the chip on the communication bus as expected, it indicates that the chip is a normal chip.

Exemplarily, chip 1 is expected to detect a start signal; chip 2 is expected to detect a start signal and a target event corresponding to chip 1 (i.e., 1 target event is detected in addition to the start signal); chip 3 is expected to detect a start signal and target events corresponding to chips 1-chip 2 (i.e., 2 target events are detected in addition to the start signal);...; chip N is expected to detect a start signal and target events corresponding to chips 1-chip N-1 (i.e., N-1 target events are detected in addition to the start signal).

In the application scenario shown in FIG. 6A, the first chip is chip 2. After detecting the start signal and the target event corresponding to chip 1, the first chip determines that it meets the expectations of the first chip, and then generates the target event corresponding to the first chip on the communication bus. It should be noted that if chips 1-N are all normal, each chip can generate its corresponding target event on the communication bus, and the waveform of the signal generated on the communication bus is shown in FIG. 8.

However, if an abnormality occurs in chip 1, even if a condition that meets the expectations of chip 1 is generated on the communication bus, chip 1 cannot generate its corresponding target event on the communication bus. At this moment, in order to prevent the first chip (i.e., chip 2) from being affected by chip 1, a compensation signal for replacing the target event of chip 1 is generated on the communication bus. In other words, the target event detected by the first chip on the communication bus may include a compensation signal in addition to the target event normally generated by a second chip. When the target event detected by the first chip on the communication bus includes a compensation signal, the first chip can generate a target event corresponding to the first chip on the communication bus based on the compensation signal. The waveform of the signal generated on the communication bus is shown in FIG. 9.

In summary, in the embodiments of the present disclosure, when the target event detected by the first chip on the communication bus includes a compensation signal, the chip control unit is specifically configured to: if the target event detected on the communication bus meets the expectations of the first chip, then generate a target event corresponding to the first chip on the communication bus based on the compensation signal. It should be noted that the compensation signal is used to indicate that there is at least one second chip that does not generate a target event corresponding to the second chip on the communication bus as expected. That is, the compensation signal is used to indicate that there are some or all second chips that do not generate the target event corresponding to the second chip on the communication bus as expected. Specifically, it can be determined how many second chips do not generate a target event corresponding to a second chip on the communication bus as expected based on the number of compensation signals.

In one embodiment, the start signal may be a clock synchronization signal, or a power-on signal sent by the host device on the communication bus.

In one embodiment, the start signal includes a rising edge signal, a falling edge signal, a high-level signal, a low-level signal, or a logic signal composed of high and low-level signals generated on the communication bus, which is not limited in the embodiments of the present disclosure.

In some embodiments, when the host device and the chip communicate using the 12C protocol, the start signal may be a rising edge signal generated on a clock bus or a data bus between the host device and the chip.

The target event generated by a chip may be a level signal, which may be a high-level signal, a low-level signal, or a logic signal composed of high and low-level signals. In addition, a chip's expectations may not include a start signal, which is not limited in the embodiments of the present disclosure. In some embodiments, the compensation signal is generated by the host device on the communication bus. Specifically, the host device detects a target event on the communication bus. When the host device detects that there is at least one second chip that does not generate a target event corresponding to the second chip on the communication bus as expected, a corresponding compensation signal is generated on the communication bus.

Exemplarily, in the application scenario shown in FIG. 6A, if the host device detects that chip 1 does not generate its corresponding target event on the communication bus as expected, a compensation signal corresponding to chip 1 is generated on the communication bus. If the host device detects that chip 3 does not generate its corresponding target event on the communication bus as expected, a compensation signal corresponding to chip 3 is generated on the communication bus.

In some embodiments, a compensation signal is generated by a predefined second chip on a communication bus. When a first chip is specifically used to communicate with at least two second chips via the communication bus, the compensation signal is used to indicate that some or all of the at least two second chips fail to generate a target event corresponding to the second chip on the communication bus as expected. The compensation signal is generated by some or all of the second chips other than the second chip(s) that fails to generate a corresponding target event on the communication bus as expected among the at least two second chips. That is, the predefined second chip is some or all of the other second chips among the multiple second chips except the abnormal chip(s).

Exemplarily, in the application scenario shown in FIG. 6A, chip 1 and chip 3-chip N are all second chips. For example, chip 1 is a predefined second chip or chip 3 is a predefined second chip, etc. Specifically, the predefined second chip detects a target event on the communication bus, and when the predefined second chip detects that there is at least one second chip other than itself that does not generate a target event corresponding to the second chip on the communication bus as expected, a compensation signal is generated on the communication bus. Exemplarily, in the application scenario shown in FIG. 6A, chip 3 is used as the predefined second chip. If chip 3 detects that chip 1 does not generate its corresponding target event on the communication bus as expected, a compensation signal corresponding to chip 1 is generated on the communication bus. If chip 3 detects that chip 4 does not generate its corresponding target event on the communication bus as expected, a compensation signal corresponding to chip 4 is generated on the communication bus. Exemplarily, chip 2 and chip 3 can be set as predefined second chips. If chip 2 detects that chip 1 does not generate its corresponding target event on the communication bus as expected, a compensation signal corresponding to chip 1 is generated on the communication bus. If chip 3 detects that chip 4 does not generate its corresponding target event on the communication bus as expected, a compensation signal corresponding to chip 1 is generated on the communication bus. That is, there can be multiple predefined second chips. When there are multiple predefined second chips that can be used to generate compensation signals on the communication bus, it can be determined by itself according to certain rules which predefined second chip is to generate the compensation signal.

Referring continuously to FIG. 8, it should be noted that if the chips are normal, each chip will generate a corresponding target event in the corresponding time interval. In other words, each chip has its corresponding time window for generating target events. Therefore, the target event can be detected within the time window corresponding to each chip to determine whether each chip generates its corresponding target event as expected. When a compensation signal is generated by the host device on the communication bus, if the host device detects that there is at least one chip that does not generate the target event corresponding to the chip on the communication bus in the time window corresponding to the chip, then a compensation signal is generated on the communication bus.

Specifically, in an embodiment of the present disclosure, if the host device does not detect the target event generated by each chip within the time window corresponding to the chip, a compensation signal corresponding to that chip is generated on the communication bus at the end point of the time window corresponding to the chip, or a compensation signal corresponding to the chip is generated on the communication bus within a short period of time after the end point of the time window corresponding to the chip.

It should be noted that the starting point of the time window corresponding to a chip may be the time point at which a predefined specific signal included in the start signal is generated, the time point at which a predefined specific signal included in the compensation signal is generated, or the time point at which a predefined specific signal included in the target event generated by a normal chip is generated. This depends on whether the previous signal in the time window corresponding to the chip is a start signal, a compensation signal, or a normal target event.

In the embodiments of the present disclosure, once the host device detects that a predefined specific signal is generated on the communication bus, the time point at which the predefined specific signal is generated is set as the starting point of the time window for generating the target event corresponding to the chip.

The predefined specific signal may be a rising edge signal, a falling edge signal, a high-level signal, a low-level signal, or a logic signal composed of high and low-level signals, etc.

When the predefined specific signal can be generated at a specific time point, such as a rising edge signal or a falling edge signal, the starting point of the time window for generating the target event corresponding to the chip is directly the time point at which the predefined specific signal is generated on the communication bus, or the time point at which any device connected to the communication bus detects the predefined specific signal on the communication bus.

When the predefined specific signal can be generated within a time period of a certain length, the starting point of the time window for generating the target event corresponding to the chip is directly the starting point, the ending point, or any time point in the predefined specific signal generated on the communication bus, which is not limited in the embodiments of the present disclosure, and a person skilled in the art can set according to actual needs.

For example, in the application scenario shown in FIG. 8, the previous signal of the time window corresponding to chip 1 is a start signal, and the starting point of the time window corresponding to chip 1 is the time point at which a predefined specific signal included in the start signal is generated. Further, the time window corresponding to chip 1 for generating the target event is a predefined time period after the starting point, and those skilled in the art can adjust the time period accordingly according to actual needs, which is not limited in the embodiments of the present disclosure.

It should be noted that if the host device detects that chip 1 does not generate its corresponding target event on the communication bus according to its corresponding time window for generating the target event, a compensation signal corresponding to chip 1 is generated on the communication bus, as shown in FIG. 9. In one example, the predefined specific signal is a rising edge signal or a falling edge signal included in the start signal. For example, in the application scenario shown in FIG. 9, the previous signal of the time window corresponding to chip 2 is a compensation signal, and the starting point of the time window corresponding to chip 2 is the time point at which the predefined specific signal included in the compensation signal is generated. Further, the time window corresponding to chip 2 is a predefined time period after the starting point, and those skilled in the art can adjust the time period accordingly according to actual needs, which is not limited in the embodiments of the present disclosure. It should be noted that if the host device detects that chip 2 does not generate its corresponding target event on the communication bus according to its corresponding time window, a compensation signal corresponding to chip 2 is generated on the communication bus (not shown in the figure). Here, the predefined specific signal, for example, is a rising edge signal or a falling edge signal included in the start signal.

Exemplarily, in the application scenario shown in FIG. 9, the previous signal of the time window corresponding to chip 3 is a target event normally generated by chip 2, then the starting point of the time window corresponding to chip 3 is the time point at which the predefined specific signal included in the target event is generated. Further, the time window corresponding to chip 3 is a predefined time period after the starting point, and those skilled in the art can adjust the time period accordingly according to actual needs, which is not limited in the embodiments of the present disclosure. It should be noted that if the host device detects that chip 3 does not generate its corresponding target event on the communication bus according to its corresponding time window, a compensation signal corresponding to chip 3 is generated on the communication bus (not shown in the figure). In one example, the predefined specific signal is a rising edge signal or a falling edge signal included in the target event generated by a chip.

If the compensation signal is generated by a predefined second chip on the communication bus, when the first chip is specifically configured to communicate with at least two second chips through the communication bus, the compensation signal is generated by part or all of the second chips other than the second chip, that did not generate the corresponding target event on the communication bus as expected, among the at least two second chips. That is, the predefined second chip is another second chip among the multiple second chips except the abnormal chip(s). Similarly, the starting point of the time window corresponding to a second chip may be the time point at which a predefined specific signal included in the start signal is generated, the time point at which a predefined specific signal included in the compensation signal is generated, or the time point at which a predefined specific signal included in the target event corresponding to the normal chip is generated. This depends on whether the previous signal of the time window corresponding to the second chip is the start signal, the compensation signal, or the target event corresponding to a normal chip.

Specifically, in the embodiments of the present disclosure, if a predefined second chip does not detect the target event generated by a second chip within the time window corresponding to each second chip other than itself, a compensation signal is generated on the communication bus at the end point of the time window corresponding to that second chip, or a compensation signal is generated on the communication bus within a short time after the end point of the time window corresponding to that second chip. Exemplarily, in the application scenario shown in FIG. 8, the previous signal of the time window corresponding to chip 1 is a start signal, and the starting point of the time window corresponding to chip 1 is the time point at which a predefined specific signal included in the start signal is generated. Further, the time window corresponding to chip 1 is a predefined time period after the starting point, and those skilled in the art can adjust the time period accordingly according to actual needs, which is not limited in the embodiments of the present disclosure. It should be noted that if a predefined second chip detects that chip 1 does not generate its corresponding target event on the communication bus according to its corresponding time window, a compensation signal corresponding to chip 1 is generated on the communication bus, as shown in FIG. 9. The predefined second chip may be any normal second chip except chip 1. Compared to the start signal, the starting point of the time window of the target event corresponding to the predefined second chip generated on the communication bus is later than the starting point of the time window corresponding to chip 1. For the description of the starting point of the time window corresponding to chip 1, refer to the above descriptions, detail of which will not be repeated here.

Exemplarily, in the application scenario shown in FIG. 9, the previous signal of the time window corresponding to chip 2 is a compensation signal, and the starting point of the time window corresponding to chip 2 is the time point at which a predefined specific signal included in the compensation signal is generated. Further, the time window corresponding to chip 2 is a predefined time period after the starting point, and those skilled in the art can adjust the time period accordingly according to actual needs, which is not limited in the embodiments of the present disclosure. It should be noted that if the predefined second chip detects that chip 2 does not generate its corresponding target event on the communication bus according to its corresponding time window, a compensation signal (not shown in the figure) is generated on the communication bus. In other words, the second chip corresponding to the compensation signal is abnormal, and the second chip corresponding to the compensation signal does not generate the target event on the communication bus as expected within its corresponding time window. The predefined second chip can be any normal second chip other than the second chip corresponding to the compensation signal. For the description related to the starting point of the time window corresponding to chip 2, refer to the above descriptions, detail of which will not be repeated here.

Exemplarily, in the application scenario shown in FIG. 9, the previous signal of the time window corresponding to chip 3 is the target event normally generated by chip 2, and the starting point of the time window corresponding to chip 3 is the time point at which a predefined specific signal included in the target event is generated. Further, the time window corresponding to chip 3 is a predefined period after the starting point, and those skilled in the art can make corresponding adjustments to the time period according to actual needs, which is not limited in the embodiments of the present disclosure. It should be noted that if the predefined second chip detects that chip 3 does not generate its corresponding target event on the communication bus according to its corresponding time window, a compensation signal (not shown in the figure) is generated on the communication bus, where the predefined second chip can be any normal second chip other than chip 2, chip 3, and a second chip corresponding to the compensation signal. For the description related to the starting point of the time window corresponding to chip 3, refer to the above descriptions, detail of which will not be repeated here.

It should be noted that a normal second chip refers to a chip that can generate a target event on the communication bus within the time window corresponding to the chip. It should be noted that if an abnormal chip cannot generate a target event on the communication bus within the time window corresponding to itself, the abnormal chip cannot generate a signal on the communication bus within the time window corresponding to other chips.

Further, for a situation where a predefined second chip generates a compensation signal on the communication bus, when multiple compensation signals need to be generated, that is, when there are multiple second chips that fail to generate the target events corresponding to the second chips on the communication bus as expected, the predefined second chips corresponding to the compensation signals generated at different times may be the same or different, which is not limited in the embodiments of the present disclosure.

In one embodiment, the compensation signal is a signal directly generated by the host device or a predefined second chip on the communication bus. The compensation signal at least includes a low-level signal of a certain time length.

Further, when the target event and compensation signal normally generated by the chip are both level signals, the first chip can obtain the quantity information of the predefined level signal in the target event detected on the communication bus, and compare the quantity information with a predefined benchmark quantity information, and determine whether to generate a target event corresponding to the first chip on the communication bus according to the comparison result. Here, the predefined benchmark quantity information is obtained by the first chip. Specifically, the predefined benchmark quantity information can be directly stored in a storage unit included in the first chip or built into the corresponding control program in the first chip or is calculated and generated by the control program corresponding to the first chip using a certain algorithm as needed, or provided by other external devices that can communicate with the first chip. The specific value of the predefined benchmark quantity information can be set by those skilled in the art according to actual needs, which is not limited in the embodiments of the present disclosure. The predefined level signal can be a high-level signal, a low-level signal, or a combination of a high-level signal and a low-level signal. Preferably, the predefined level signal is a low-level signal.

In one embodiment, the first chip can directly count the predefined level signals detected on the communication bus to obtain the quantity information of the predefined level signals, and then compare the quantity information of the predefined level signals with the predefined benchmark quantity information and determine whether to generate a target event corresponding to the first chip on the communication bus based on the comparison result.

In another embodiment, the first chip can indirectly count the predefined level signals detected on the communication bus to obtain quantity information of the predefined level signals. By way of example, each predefined level signal generated on the communication bus is used to trigger a counting unit built into the first chip or a counting unit interconnected with the first chip to count, thereby enabling the chip control unit of the first chip to obtain the quantity information of the predefined level signals. The chip control unit then compares the quantity information of the predefined level signals with the predefined benchmark quantity information and determines whether a target event corresponding to the first chip is generated on the communication bus based on the comparison result.

Specifically, in the embodiments of the present disclosure, a predefined level signal detected by the first chip on the communication bus specifically refers to a predefined level signal detected between a previous predefined specific signal detected on the communication bus and a next predefined specific signal. The predefined level signal detected during this period is counted as one predefined level signal regardless of the specific duration. For example, when the predefined level signal is low level, as long as there is a low-level signal between the previous predefined specific signal and the next predefined characteristic signal, it is counted as one low-level signal regardless of the duration of the low-level signal. Here, the previous predefined specific signal can be a start signal, a compensation signal, or a predefined specific signal included in the target event corresponding to the chip, and the next predefined specific signal can be a compensation signal, or a predefined specific signal included in the target event corresponding to the chip, which is not limited in the embodiments of the present disclosure.

It is additionally noted that in the application scenario shown in FIG. 8 or FIG. 9, when the predefined level signal is a low-level signal, the low-level signal included in the start signal can also be counted as one low-level signal. Exemplarily, in the application scenario shown in FIG. 8, the predefined benchmark quantity information of the first chip (i.e., chip 2) is 1. When the first chip detects the target event corresponding to chip 1 on the communication bus, the number information counted is 1. That is, the predefined reference quantity is reached, and then the target event corresponding to the first chip is generated on the communication bus. In the application scenario shown in FIG. 9, the predefined benchmark quantity information of the first chip (i.e., chip 2) is 1. When the first chip detects the compensation signal on the communication bus, the number information counted is 1. That is, the predefined reference quantity is reached, and then the target event corresponding to the first chip is generated on the communication bus. In other words, in the embodiments of the present disclosure, the predefined level signal statistically includes both the target event normally generated by the chip and the compensation signal.

In some embodiments, the predefined level signal statistically may also include a start signal. Exemplarily, in the application scenario shown in FIG. 8, when the predefined level signal statistically includes a start signal, the predefined benchmark quantity information of the first chip (i.e., chip 2) is 2. When the first chip detects the start signal and the target event corresponding to chip 1 on the communication bus, the statistical quantity information is 2. That is, the predefined reference quantity is reached, and then the target event corresponding to the first chip is generated on the communication bus. In the application scenario shown in FIG. 9, the predefined benchmark quantity information of the first chip (i.e., chip 2) is 2. When the first chip detects the start signal and the compensation signal on the communication bus, the statistical quantity information is 2. That is, the predefined reference quantity is reached, and then the target event corresponding to the first chip is generated on the communication bus.

To facilitate the distinction between the compensation signal and a target event normally generated by the chip, in some embodiments, when the compensation signal and the target event corresponding to the first chip are level signals respectively, the level width of the target event corresponding to the first chip is different from the level width of the compensation signal. Exemplarily, the level width of the target event corresponding to the first chip is greater than the level width of the compensation signal, as shown in FIG. 9. That is, the time widths of the low-level signals included in the target event corresponding to the first chip and the compensation signal are different. The time width of the low-level signal included in the target event corresponding to the first chip is greater than the time width of the low-level signal included in the compensation signal. Apparently, those skilled in the art can also set the level width of the target event corresponding to the first chip to be less than the level width of the compensation signal according to actual needs, which is not limited in the embodiments of the present disclosure.

In the embodiments of the present disclosure, since the level widths of the target event normally generated by the chip and the compensation signal are different, it is possible to determine whether it is the target event normally generated by the chip or the compensation signal based on the level width of the detected signal, and then determine whether the chip is abnormal.

Exemplarily, in the application scenario shown in FIG. 9, the level signal detected in the time window corresponding to chip 1 and the level signal detected within a certain period of time after the end point of the time window corresponding to chip 1 are analyzed. If the level width of a level signal is used for analysis, it can be determined that the pulse signal is a compensation signal. In addition, since the compensation signal is detected at the end point of the time window corresponding to chip 1 or within a certain period of time after the end point of the time window corresponding to chip 1, it can be determined that chip 1 is abnormal. The level signal detected in the time window corresponding to chip 2 is analyzed. According to the level width of the level signal, it can be determined that the pulse signal for chip 2 is a normal target event. In addition, since a target event is detected in the time window corresponding to chip 2, it can be determined that chip 2 is normal. Similar process can be applied to other chips, detail of which will not be repeated here.

It should be noted that the above-described abnormal chip detection process can be executed by the host device, by the first chip, or a second chip, which is not limited in the embodiments of the present disclosure.

In another embodiment, the compensation signal may also be an indication message for indicating that a second chip fails to generate a target event corresponding to the second chip on the communication bus as expected. That is, the compensation signal is not a signal directly generated by the host device or a predefined second chip on the communication bus, but is an indication message reflected on the communication bus.

Specifically, in an embodiment of the present disclosure, the first chip detects by itself that there is a second chip on the communication bus and that the target event corresponding to the second chip is not generated on the communication bus as expected. The first chip then determines whether to generate the target event corresponding to the first chip on the communication bus based on the compensation signal detected by itself.

In an embodiment of the present disclosure, the way in which the first chip detects whether there is a target event on the communication bus and whether a second chip fails to generate a target event corresponding to the second chip on the communication bus as expected is similar to the way of the host device. For example, once the first chip detects a predefined specific signal on the communication bus, it is set as the starting point of a time window corresponding to a second chip. If the first chip fails to detect the target event corresponding to a second chip within the time windows corresponding to each second chip, a compensation signal indicating that there is at least one second chip that fails to generate a target event corresponding to the second chip on the communication bus as expected is obtained.

Specifically, if the first chip detects on the communication bus that there are multiple second chips that fail to generate target events corresponding to the second chips on the communication bus as expected, it determines that there are multiple compensation signals on the communication bus.

In the embodiments of the present disclosure, when the first chip determines whether to generate the target event corresponding to the first chip on the communication bus based on the compensation signal detected on the communication bus, the first chip can obtain the quantity information of the predefined level signal detected by the first chip on the communication bus other than the compensation signal generated by the host device or the predefined second chip on the communication bus. The first chip then calculates the quantity information of the detected predefined level signal and the quantity information of the compensation signal to obtain the sum of the two quantities. The first chip then determines whether to generate the target event corresponding to the first chip on the communication bus based on the sum of the two quantities and the predefined benchmark quantity information. Here, the quantity information of the predefined level signal detected by the first chip on the communication bus can refer to the methods described in the previous embodiments in which the compensation signal is directly generated on the communication bus by the host device or the predetermined second chip, detail of which will not be repeated here. In other words, the first chip does not use the compensation signal generated by the host device or the predetermined second chip on the communication bus to determine whether to generate the target event corresponding to the first chip on the communication bus, but uses the indication message included in the target event detected by itself on the communication bus to indicate that there is a second chip that does not generate its corresponding target event on the communication bus as expected to determine whether to generate the target event corresponding to the first chip on the communication bus.

For example, when the predefined benchmark quantity information corresponding to the first chip is 3, and when the predefined level signal detected by the first chip on the communication bus is 1, it is determined that there are 2 second chips that fail to generate the target event corresponding to the second chip on the communication bus as expected. Then it can be determined that the number of predefined level signals finally detected by the first chip is 3. That is, it reaches the predefined reference quantity, and then the target event corresponding to the first chip is generated on the communication bus.

Further, the target event generated by a chip can be used to determine the connection status between the chip and the host device.

In an embodiment of the present disclosure, when the target event corresponding to a chip or the compensation signal is a low-level signal, once the host device detects a predefined specific signal on the communication bus, it starts until a next predefined specific signal is detected on the communication bus after the end point of the time window corresponding to each chip. That is, the host device detects the level signal on the communication bus at every predefined time interval between the starting point of the time window corresponding to the previous chip and the starting point of the time window corresponding to the next chip, and counts the number of high-level signals and low-level signals detected, respectively, to obtain a first count value C1 and a second count value C2. Specifically, at each detection time point of a printer's level signal detection, if the detected level signal is determined to be a high-level signal, the value of the first count value C1 is increased by 1, and if at each detection time point of the printer's level signal detection, if the detected level signal is determined to be a low-level signal, the second count value C2 is increased by 1.

Specifically, when C2 is equal to 0, that is, the low-level signal corresponding to a chip is not detected within the time window corresponding to the chip, it is determined that the contact between the chip and the host device is completely disconnected, and a prompt message indicating that the chip is not mounted is output.

Specifically, when C1 is not equal to 0, and C2 is not equal to 0, and C1 is greater than or equal to a first predefined threshold TH1, and C2 is greater than or equal to a second predefined threshold TH2, it is determined that the contact between the chip and the host device is good.

Specifically, when C1 is not equal to 0 and C2 is not equal to 0, it is possible that C1 is less than TH1 or C2 is less than TH2, it is then determined that the chip is in contact with the host device, but there is a problem of poor contact.

Here, in the embodiments of the present disclosure, TH1 and TH2 are related to the size of the time window corresponding to each chip, and can be set according to actual needs, which is not limited in the embodiments of the present disclosure.

Further, the communication bus in the disclosed embodiments can be any communication bus described in any content, and the above-described embodiments can be used to determine whether the electrical connection between the host device and the chip on any communication bus is good. For example, when a chip and the host device communicate using the 12C communication protocol, the communication bus can be a clock line for transmitting a clock signal, or a data line for transmitting a data signal. If the target event or compensation signal corresponding to a chip is generated on a clock line, the electrical connection state between the chip and the host device on the clock line can be determined by the method described in the disclosed embodiments. Similarly, the electrical connection state between the chip and the host device on a data line can also be determined by referring to the methods described in the embodiments.

Further, when there are multiple communication buses between the host device and a chip, if it is determined that there is poor contact on at least one of the buses between the host device and the chip, then the electrical connection between the host device and the chip is determined to be poor contact. If it is determined that the contact on each bus between the host device and the chip is good, then the electrical contact between the host device and the chip is determined to be good contact.

Further, the target event generated by a chip can also be used to determine the communication rate between the chip and the host device. Specifically, the result of determining whether the electrical connection between the host device and the chip is good is also used to determine the communication rate between the host device and the chip.

In an embodiment of the present disclosure, when it is determined that the contact between the host device and a chip is good, the communication rate between the host device and the chip can be determined to be V1. When it is determined that the contact between the host device and the chip is good but there is a problem of poor contact, the communication rate between the host device and the chip can be determined to be V2, where V2<V1. That is, when it is determined that the contact between the host device and the chip is poor, the transmission rate between the host device and the chip is reduced to reduce the probability of data transmission errors between the host device and the chip.

Further, when it is necessary to comprehensively consider the electrical connection between the host device and the multiple chips to determine the communication rate between the host device and each chip, when it is determined by the disclosed methods that there is a poor electrical connection between at least one chip among the multiple chips and the host device, the communication rate between the host device and the multiple chips is determined to be the communication rate V2. When it is determined by the disclosed methods that the electrical connection between each chip among the multiple chips and the host device is good, the communication rate between the host device and the multiple chips is determined to be the communication rate V1.

Corresponding to the above embodiments, the embodiments of the present disclosure also provide a control device.

An embodiment of the present disclosure also provides a control device, including: a detection unit, a determination unit, and a signal generation unit.

The detection unit is configured to detect a target event on a communication bus, where the communication bus is configured to be electrically connected to the first chip and at least one second chip. The target event includes a compensation signal, where the compensation signal is used to indicate that some or all of the at least one second chip do not generate a target event corresponding to the second chip on the communication bus as expected.

The determination unit is configured to determine whether the detected target event meets the expectations of the first chip based on the compensation signal.

The signal generation unit is configured to generate a target event corresponding to the first chip on the communication bus when it is determined that the detected target event meets the expectations of the first chip.

In one embodiment, a compensation signal is generated by a host device on the communication bus, where the host device is configured to generate the compensation signal on the communication bus when the host device detects that at least one second chip fails to generate a target event corresponding to the second chip on the communication bus as expected.

In one embodiment, when the first chip is specifically configured to communicate with at least two second chips through a communication bus, the compensation signal is used to indicate that some of the at least two second chips fail to generate target event(s) corresponding to the second chip(s) on the communication bus as expected. A compensation signal is generated by some or all of the second chips other than the second chips, among the at least two second chips, that fail to generate corresponding target events on the communication bus as expected.

In one embodiment, when the target event corresponding to the first chip and the compensation signal are respectively level signals, the level width of the target event corresponding to the first chip is different from the level width of the compensation signal.

In one embodiment, the level width of the target event corresponding to the first chip is greater than the level width of the compensation signal.

In one embodiment, when the target event corresponding to the first chip and compensation signal are respectively level signals, the determination unit is configured to determine the quantity information of predefined level signals in the target event detected on the communication bus, and determine whether the detected target event meets the expectations of the first chip based on the quantity information of the predefined level signals and the predefined benchmark quantity information.

In one embodiment, the determination unit is configured to determine the quantity information of predefined level signals in the target event detected on the communication bus based on the compensation signal, and determine whether the detected target event meets the expectations of the first chip based on the quantity information of the predefined level signals and the predefined benchmark quantity information.

In one embodiment, the target event corresponding to the first chip is used to determine a connection state between the first chip and the host device.

In one embodiment, the target event corresponding to the first chip is used to determine a communication rate between the first chip and the host device.

In the embodiments of the present disclosure, the detection unit, the determination unit, and the signal generation unit can be implemented by software or by hardware.

In one embodiment, at least one of the detection unit, the determination unit, and the signal generation unit can be an external module outside the first chip and electrically connected to the first chip, while the remaining units are built into the chip control unit of the first chip. In other words, the consumable includes the first chip and an external module electrically connected to the first chip.

Specifically, the detection unit includes a signal acquisition module such as a general-purpose input/output (GPIO) interface or an analog-to-digital converter (ADC) module, or a circuit unit composed of components such as a resistor, a capacitor, and an operational amplifier.

Specifically, the determination unit is configured to receive the signal collected by the detection unit and determine whether the signal collected by the detection unit is consistent with expectations. The determination unit includes, for example, an input unit, a logic comparison circuit, and an output unit, where the logic comparison circuit can be composed of logic units such as AND gate circuit, OR gate circuit, NOT gate circuit, trigger, etc.

Specifically, the signal generation unit is configured to receive the outcome of the determination unit and determine whether to generate a target event corresponding to the first chip on the communication bus based on the outcome. The signal generation unit includes components such as transistors and metal-oxide-semiconductor (MOS) tubes to form a signal output circuit.

In one embodiment, the detection unit, determination unit, and signal generation unit are all included in the first chip.

In one embodiment, the detection unit, determination unit, and signal generation unit are included in a chip control unit of the first chip.

In one embodiment, the detection unit, determination unit, and signal generation unit are other modules mounted on the consumable that are different from in the first chip, which is not limited in the present disclosure.

It should be noted that some specific details related to the embodiments disclosed herein can refer to the earlier descriptions. For the sake of brevity, these descriptions will not be repeated here.

Corresponding to the above embodiments, the embodiments of the present disclosure also provide a communication method.

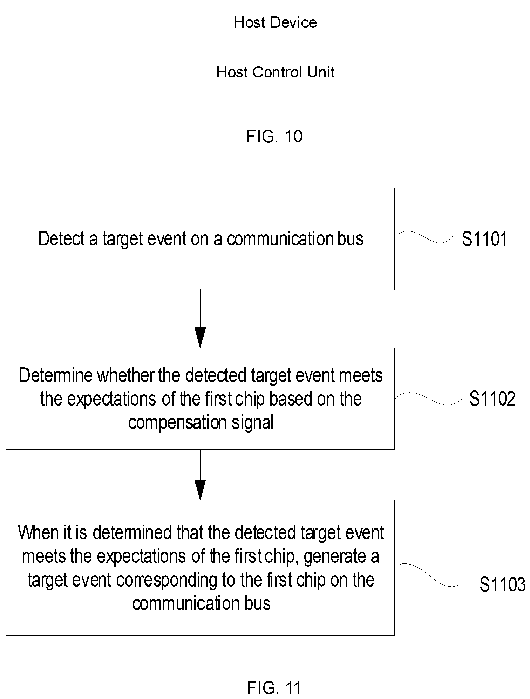

FIG. 11 is a flow chart of a communication method in accordance with an embodiment of the present disclosure. The method can be applied to a control device. As shown in FIG. 11, the method mainly includes the following steps.

S1101: Detect a target event on a communication bus, where the target event includes a compensation signal, where the compensation signal is used to indicate that there is at least one second chip that fails to generate a target event corresponding to the second chip on the communication bus as expected.

S 1102: Determine whether the detected target event meets the expectations of the first chip based on the compensation signal.

S1103: When it is determined that the detected target event meets the expectations of the first chip, generate a target event corresponding to the first chip on the communication bus.

The communication bus is configured to electrically connect the first chip and at least one second chip, and the compensation signal is used to indicate that some or all of the at least one second chip fail to generate a target event corresponding to the second chip on the communication bus as expected.

In some embodiments, the compensation signal is generated by the host device on the communication bus, and the host device is configured to generate the compensation signal on the communication bus when it is detected that at least one second chip fails to generate a target event corresponding to the second chip on the communication bus as expected. That is, the host device is configured to generate the compensation signal on the communication bus when it is detected that some or all of the at least one second chip fail to generate a target event corresponding to the second chip on the communication bus as expected.

In some embodiments, when the first chip is specifically configured to communicate with at least two of the second chips through a communication bus, the compensation signal is generated by part or all of the second chips other than the second chips, among the at least two second chips, that fail to generate the corresponding target event on the communication bus as expected.

In some embodiments, when the target event corresponding to the first chip and the compensation signal are level signals respectively, the level width of the target event corresponding to the first chip is different from the level width of the compensation signal.

In some embodiments, when the target event corresponding to the first chip and the compensation signal are respectively level signals, determining whether the detected target event meets the expectations of the first chip based on the compensation signal specifically includes: determining the quantity information of predefined level signals in the target event detected on the communication bus, and determining whether the target event detected on the communication bus meets the expectations of the first chip based on the quantity information of the predefined level signals and the predefined benchmark quantity information.

In some embodiments, the target event corresponding to the first chip is used to determine a connection state between the first chip and the host device.

In some embodiments, the target event corresponding to the first chip is used to determine a communication rate between the first chip and the host device.

It should be noted that some specific details related to the embodiments disclosed herein can refer to the earlier descriptions. For the sake of brevity, these descriptions will not be repeated here.

Referring to FIG. 10, a block diagram of a host device in accordance with an embodiment of the present disclosure is provided. The host device is configured to communicate with multiple chips via a communication bus. As shown in FIG. 10, the host device includes a host control unit, which is configured to: detect a target event on the communication bus; if it is detected that there is at least one chip that does not generate a target event corresponding to the chip on the communication bus as expected, generate a compensation signal on the communication bus. The compensation signal is used to enable a chip among the multiple chips, other than the chips that do not generate a corresponding target event on the communication bus as expected, to determine whether to generate a target event corresponding to the chip on the communication bus based on the compensation signal.

In some embodiments, the host control unit is specifically configured to generate a compensation signal on the communication bus if it is detected that at least one chip fails to generate a target event corresponding to the chip on the communication bus according to a time window corresponding to the chip.

In some embodiments, the host control unit is specifically configured to: generate a start signal on the communication bus; and set the time point at which at least part of the signals included in the start signal is generated as the starting point of the time window corresponding to the chip, where the time window corresponding to the chip is a predefined time period after the starting point.

In some embodiments, after the host control unit generates a compensation signal on the communication bus, the host control unit is specifically configured to set the time point at which at least part of the signals, included in the compensation signal generated on the communication bus, is generated as the starting point of the time window corresponding to the chip, where the time window corresponding to the chip is a predefined time period after the starting point.

Further, when there are multiple compensation signals generated on the communication bus, preferably, the time point at which at least part of the signals included in an adjacent compensation signal is generated is set as the starting point of the time window corresponding to the chip.

In some embodiments, the host control unit is specifically configured to set the time point at which at least part of the signals, included in the target event corresponding to the chip generated on the communication bus, is generated as the starting point of the time window corresponding to the chip, and the time window corresponding to the chip is a predefined time period after the starting point.

Further, when there are multiple target events corresponding to chips generated on the communication bus, preferably, the time point at which at least part of the signals included in a target event corresponding to an adjacent chip is generated is set as the starting point of the time window corresponding to the chip.

In some embodiments, when the compensation signal and the target event corresponding to the chip are both level signals, the level width of the compensation signal is different from the level width of the target event corresponding to the chip.

In some embodiments, the level width of the compensation signal is shorter than the level width of the target event corresponding to the chip.

In some embodiments, the host control unit is configured to: if it is detected that at least one chip generates a target event corresponding to a chip on the communication bus as expected, determine the connection status between the chip and the host device based on the target event corresponding to the chip detected on the communication bus.

In some embodiments, the host control unit is configured to determine a communication rate between the host device and the chip according to a connection state between the chip and the host device.

It should be noted that the chips described in the embodiments of the present disclosure include the first chip and the second chips described above. For the specific content executed on the host device side, refer to the descriptions of the chip side described above. For the sake of brevity, these descriptions will not be repeated here.

Corresponding to the above-described embodiments, the embodiments of the present disclosure further provide a compensation signal generating device, including: a detection unit, configured to detect a target event on the communication bus; a determination unit, configured to determine, based on the detected target event, whether there is at least one chip that fails to generate a target event corresponding to the chip on the communication bus as expected; and a signal generation unit, configured to generate a corresponding compensation signal on the communication bus when it is determined that at least one chip fails to generate a target event corresponding to the chip on the communication bus as expected.

In one embodiment, the determination unit is configured to determine, based on the detected target event, whether there is at least one chip that fails to generate a target event corresponding to the chip on the communication bus according to a time window corresponding to the chip.

The signal generation unit is configured to generate a corresponding compensation signal on the communication bus when it is determined that there is at least one chip that fails to generate the target event corresponding to the chip on the communication bus in the time window corresponding to the chip.

In one embodiment, the compensation signal generating device further includes a setting up unit, which is configured to set the time point at which at least part of the signals included in the start signal is generated as the starting point of the time window corresponding to the chip, where the time window corresponding to the chip is a predefined time period after the starting point.

In one embodiment, the compensation signal generating device further includes a setting up unit, which is used to set the compensation signal generated in the communication system.

The time point at which at least part of the signals included in the compensation signal generated online is generated is set as the starting point of the time window corresponding to the chip, and the time window corresponding to the chip is a predefined time period after the starting point.

Further, when there are multiple compensation signals generated on the communication bus, preferably, the time point at which at least part of the signals included in an adjacent compensation signal is generated is set as the starting point of the time window corresponding to the chip.

In one embodiment, the compensation signal generating device further includes a setting up unit, which is configured to set the time point at which at least part of the signals, included in the target event corresponding to the chip generated on the communication bus, is generated as the starting point of the time window corresponding to the chip, and the time window corresponding to the chip is a predefined time period after the starting point.

Further, when there are multiple target events corresponding to the chips generated on the communication bus, preferably, the time point, at which at least part of the signals included in the target event corresponding to an adjacent chip is generated, is set as the starting point of the time window corresponding to the chip.

In one embodiment, when the compensation signal and the target event corresponding to a chip are level signals respectively, the level width of the compensation signal is different from the level width of the target event corresponding to the chip.

In one embodiment, the level width of the compensation signal is shorter than the level width of the target event corresponding to the chip.

In one embodiment, the compensation signal generating device further includes a control unit, and the control unit is configured to determine a connection state between the chip and the host device according to the target event corresponding to the chip.

In one embodiment, the control unit is configured to determine a communication rate between the chip and the host device according to the target event corresponding to the chip.

In the embodiments of the present disclosure, the detection unit, the determination unit, and the signal generation unit can be implemented by software or by hardware.

Specifically, the detection unit includes a signal acquisition module such as a GPIO interface or an ADC module, or a circuit unit composed of components such as a resistor, a capacitor, and an operational amplifier.

Specifically, the determination unit is configured to receive the signal collected by the detection unit and determine whether the signal collected by the detection unit is consistent with expectations. The determination unit includes, for example, an input unit, a logic comparison circuit, and an output unit, where the logic comparison circuit can be composed of logic units such as AND gate circuit, OR gate circuit, NOT gate circuit, trigger, etc.

Specifically, the signal generation unit is configured to receive the outcome of the determination unit and determine whether to generate a target event corresponding to the first chip on the communication bus based on the outcome, where the signal generation unit includes components such as transistors and MOS tubes to form a signal output circuit.

In one embodiment, the detection unit, determination unit, and signal generation unit are all included in the host device.

In one embodiment, the detection unit, determination unit, and signal generation unit are included in a host control unit of the host device.

In one embodiment, at least one of the detection unit, determination unit, and signal generation unit is an external module connected to the host control unit, while the remaining modules are disposed inside the host control unit.

In one embodiment, the detection unit, determination unit, and signal generation unit are all included in a predefined second chip.

In one embodiment, the detection unit, determination unit, and signal generation unit are included in a chip control unit of a predefined second chip.

In one embodiment, at least one of the detection unit, determination unit, and signal generation unit is an external module connected to a chip control unit of a predefined second chip, while the remaining modules are disposed inside the chip control unit of the predefined second chip.

In one embodiment, the compensation signal generating device may also be another module different from the predefined second chip provided on the consumable, which is not limited in the embodiments of present disclosure. The predefined second chip refers to a chip with the ability to generate compensation signals, and specific details can refer to earlier descriptions and will not be repeated here.

Corresponding to the above embodiments, the embodiments of the present disclosure also provide a communication system. The communication system includes the host device described above, and multiple chips, where the multiple chips are respectively connected to the host device through a communication bus. The multiple chips include at least one of the first chips described above. If it is detected that at least one chip fails to generate a target event corresponding to the chip on the communication bus as expected, the host device or one of the multiple chips generates a compensation signal on the communication bus. In other words, when it is detected that a chip fails to generate a target event corresponding to the chip on the communication bus as expected, a compensation signal is generated on the communication bus by only one device (e.g., a host device or a chip) to avoid generating redundant compensation signals on the communication bus, causing signal disorder in the communication system.

It should be noted that some specific details related to the embodiments disclosed herein can refer to the earlier descriptions. For the sake of brevity, these descriptions will not be repeated here.

Corresponding to the above embodiments, the embodiments of the present disclosure also provide another communication method.

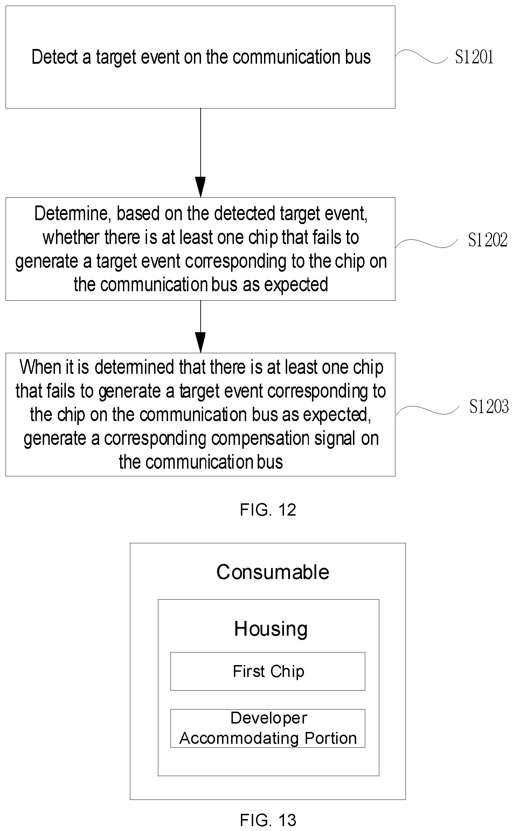

FIG. 12 is a flow chart of another communication method in accordance with an embodiment of the present disclosure. The method can be applied to the compensation signal generating device. As shown in FIG. 12, the method mainly includes the following steps.

S 1201: Detect a target event corresponding to a chip on the communication bus.

S 1202: Determine, based on the detected target event, whether there is at least one chip that fails to generate a target event corresponding to the chip on the communication bus as expected.

S1203: When it is determined that there is at least one chip that fails to generate a target event corresponding to the chip on the communication bus as expected, generate a corresponding compensation signal on the communication bus.

In some embodiments, if it is determined that at least one chip fails to generate a target event corresponding to the chip on the communication bus as expected, generating a corresponding compensation signal on the communication bus, specifically including: if it is determined that at least one chip fails to generate a target event corresponding to the chip on the communication bus according to a time window corresponding to the chip, generating a corresponding compensation signal on the communication bus.

In some embodiments, if it is determined that at least one chip fails to generate a target event corresponding to the chip on the communication bus as expected, generating a corresponding compensation signal on the communication bus, specifically including: setting the time point at which at least part of the signals included in the start signal is generated as the starting point of the time window corresponding to the chip, where the time window corresponding to the chip is a predefined time period after the starting point.

In some embodiments, if it is determined that at least one chip fails to generate a target event corresponding to the chip on the communication bus as expected, generating a corresponding compensation signal on the communication bus, specifically including: setting the time point at which at least part of the signals included in the compensation signal generated on the communication bus is generated as the starting point of the time window corresponding to the chip, where the time window corresponding to the chip is a predefined time period after the starting point.

Further, when there are multiple compensation signals generated on the communication bus, preferably, the time point at which at least part of the signals included in an adjacent compensation signal is generated is set as the starting point of the time window corresponding to the chip.

In some embodiments, if it is determined that at least one chip fails to generate a target event corresponding to the chip on the communication bus as expected, generating a corresponding compensation signal on the communication bus, specifically including: detecting a target event corresponding to any chip on the communication bus, and setting the time point at which at least part of the signals included in the target event is generated as the starting point of the time window corresponding to the chip, where the time window corresponding to the chip is a predefined time period after the starting point.

In some embodiments, when the compensation signal and the target event corresponding to a chip are both level signals, the level width of the compensation signal is different from the level width of the target event corresponding to the chip.

In some embodiments, the level width of the compensation signal is shorter than the level width of the target event corresponding to the chip.

In some embodiments, the method is executed on a host device, and the method further includes determining a connection state between the chip and the host device according to a target event corresponding to the chip.

In some embodiments, the method is executed on a host device, and the method further includes determining a communication rate between the chip and the host device according to a target event corresponding to the chip.

It should be noted that some specific details related to the embodiments disclosed herein can refer to the earlier descriptions. For the sake of brevity, these descriptions will not be repeated here.

Corresponding to the above embodiments, the embodiments of the present disclosure also provide a consumable.

FIG. 13 is a schematic structural diagram of a consumable in accordance with an embodiment of the present disclosure. As shown in FIG. 13, the consumable includes a housing, a developer accommodating portion located in the housing for accommodating the developer, and a first chip described in the above embodiments.

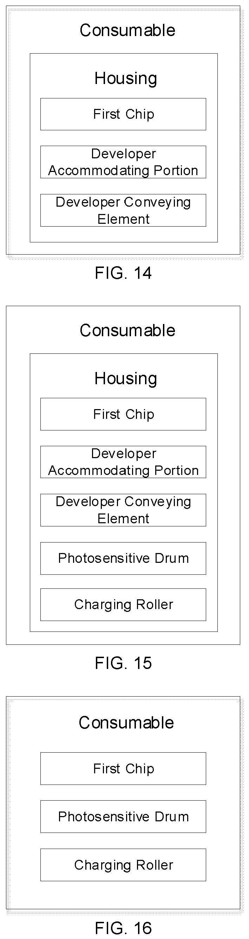

FIG. 14 is a schematic structural diagram of another consumable in accordance with an embodiment of the present disclosure. As shown in FIG. 14, the consumable further includes a developer conveying element for conveying developer based on the embodiment shown in FIG. 13.

FIG. 15 is a schematic structural diagram of another consumable in accordance with an embodiment of the present disclosure. As shown in FIG. 15, the consumable further includes a photosensitive drum and a charging roller for charging the photosensitive drum based on the embodiment shown in FIG. 14.

FIG. 16 is a schematic structural diagram of another consumable in accordance with an embodiment of the present disclosure. As shown in FIG. 16, the consumable includes a photosensitive drum; a charging roller for charging the photosensitive drum, and a first chip described in the above embodiments.

It should be noted that the specific detail of the first chip in the embodiments shown in FIGS. 13 to 16 can refer to the descriptions of the earlier embodiments, and for the sake of brevity, these descriptions will not be repeated here.

It should be noted that some specific details related to the embodiments disclosed herein can refer to the earlier descriptions. For the sake of brevity, these descriptions will not be repeated here.

In other embodiments, a consumable is provided, which includes a housing, a developer accommodating portion located in the housing and used to accommodate the developer, and the control device described in the above embodiments.

In one embodiment, the consumable further includes a developer conveying element for conveying the developer.

In one embodiment, the consumable also includes a photosensitive drum, and a charging roller for charging the photosensitive drum.

Another consumable in accordance with an embodiment of the present disclosure includes a photosensitive drum, a charging roller for charging the photosensitive drum, and a control device described in the above embodiments.

In other embodiments, a consumable is provided, which includes a housing, a developer accommodating portion located in the housing and used to accommodate the developer, and a compensation signal generating device described in the above embodiments.

In one embodiment, the consumable further includes a developer conveying element for conveying the developer.

In one embodiment, the consumable also includes a photosensitive drum, and a charging roller for charging the photosensitive drum.

A schematic structural diagram of another consumable in accordance with an embodiment of the present disclosure. The consumable includes a photosensitive drum, a charging roller for charging the photosensitive drum, and a compensation signal generating device described in the above embodiments. The above compensation signal generating device is at least a part of the above-described predefined second chip.

Corresponding to the above-described embodiments, the embodiments of the present disclosure further provide a computer-readable storage medium, where the computer-readable storage medium may store a program, where when the program is running, the device where the computer-readable storage medium is located may be controlled to execute some or all of the steps in the above-described method embodiments. In one embodiment, the computer-readable storage medium may be a magnetic disk, an optical disk, a read-only memory (ROM), or a random-access memory (RAM).

Corresponding to the above-described embodiments, the embodiments of the present disclosure further provide a computer program product, which includes executable instructions. When the executable instructions are executed on a computer, the computer executes some or all of the steps in the above-described method embodiment.

In the embodiments of the present disclosure, "at least one" refers to one or more, and "multiple" refers to two or more. "And/or" describes the association relationship of associated objects, indicating that three relationships may exist. For example, A and/or B may indicate that A exists alone, A and B exist at the same time, or B exists alone. A and B may be singular or plural. The character "/" generally indicates that the associated objects therebefore and thereafter are in an "or" relationship. "At least one of the following" and similar expressions refer to any combination of these items, including any combination of single or plural items. For example, at least one of a, b, and c may represent: a, b, c, ab, ac, bc, or abc, where a, b, c may be single or multiple.

Those of ordinary skill in the art will appreciate that the various units and algorithm steps described in the embodiments disclosed herein can be implemented in electronic hardware or a combination of computer software and electronic hardware. Whether these functions are performed in hardware or software depends on the specific application and design constraints of the technical solution. Professional and technical personnel can use different methods to implement the described functions for each specific application, but such embodiment should not be considered to be beyond the scope of the present disclosure.

Those skilled in the art can clearly understand that, for the convenience and brevity of description, the specific working processes of the systems, devices and units described above can refer to the corresponding processes in the method embodiments and will not be repeated here.

In some embodiments provided in the present disclosure, if any function is implemented in the form of a software functional unit and sold or used as an independent product, it can be stored in a computer-readable storage medium. Based on this understanding, the technical solutions of the present disclosure or essentially the part that contributes to the existing technology or the part of the technical solution can be embodied in the form of a software product, and the computer software product is stored in a storage medium, including a number of instructions to enable a computer device (which can be a personal computer, a server, or a network device, etc.) to perform all or part of the steps of the methods described in each embodiment of the present disclosure. The storage medium includes U disk, mobile hard disk, ROM, RAM, disk or optical disk and other media that can store program codes.

The foregoing description is merely some embodiments of the present disclosure. A person skilled in the art can easily think of changes or substitutions within the technical scope disclosed in the present disclosure, which should be included in the protection scope of the present disclosure. The protection scope of the present disclosure should be based on the protection scope of the claims.

## Claims

1. A communication method, comprising:
detecting a target event on a communication bus, the communication bus being configured to be electrically connected to a first chip and at least one second chip, the target event including a compensation signal, the compensation signal being used to indicate that some or all of the at least one second chip fail to generate a target event corresponding to a second chip on the communication bus as expected;
determining whether the detected target event meets expectations of the first chip based on the compensation signal; and
when it is determined that the detected target event meets the expectations of the first chip, generating a target event corresponding to the first chip on the communication bus.

2. The method according to claim 1, wherein the compensation signal is generated by a host device on the communication bus, and the host device is configured to generate the compensation signal on the communication bus when it is detected that some or all of the at least one second chip fail to generate the target event corresponding to the second chip on the communication bus as expected.

3. The method according to claim 1, wherein, when the first chip is further configured to communicate with at least two second chips through the communication bus, the compensation signal is used to indicate that some of the at least two second chips fail to generate a target event corresponding to a second chip on the communication bus as expected, and the compensation signal is generated by some or all of the second chips other than second chips, among the at least two second chips, that fail to generate corresponding target events on the communication bus as expected.

4. The method according to any one of claims 1 to 3, wherein, when the target event corresponding to the first chip and the compensation signal are level signals respectively, a level width of the target event corresponding to the first chip is different from a level width of the compensation signal.

5. The method according to claim 1, wherein, when the target event corresponding to the first chip and the compensation signal are both level signals, determining whether the detected target event meets the expectations of the first chip based on the compensation signal further comprises:
determining quantity information of predefined level signals in the target event detected on the communication bus and determining whether the target event detected on the communication bus meets the expectations of the first chip based on the quantity information of the predefined level signals and a predefined benchmark quantity information.

6. The method according to claim 1, wherein the target event corresponding to the first chip is used to determine a connection state between the first chip and the host device,
and/or, wherein the target event corresponding to the first chip is used to determine a communication rate between the first chip and the host device.

7. A control device, comprising:
a detection unit, configured to detect a target event on a communication bus, the communication bus being electrically connected to a first chip and at least one second chip, the target event including a compensation signal, the compensation signal being configured to indicate that some or all of the at least one second chip fail to generate a target event corresponding to the second chip on the communication bus as expected;
a determination unit, configured to determine whether the detected target event meets expectations of the first chip based on the compensation signal; and
a signal generation unit, configured to generate a target event corresponding to the first chip on the communication bus when it is determined that the detected target event meets the expectations of the first chip.

8. The control device according to claim 7, wherein the compensation signal is generated by a host device on the communication bus, and the host device is configured to generate the compensation signal on the communication bus when it is detected that there is at least one second chip that fails to generate a target event corresponding to the second chip on the communication bus as expected.

9. The control device according to claim 7, wherein, when the first chip is further configured to communicate with at least two second chips through the communication bus, the compensation signal is used to indicate that some of the at least two second chips fail to generate target events corresponding to the second chips on the communication bus as expected, and the compensation signal is generated by some or all of the second chips other than second chips that fail to generate corresponding target events on the communication bus as expected.

10. The control device according to any one of claims 7 to 9, wherein when the target event corresponding to the first chip and the compensation signal are level signals respectively, a level width of the target event corresponding to the first chip is different from a level width of the compensation signal.

11. The control device according to claim 7, wherein when the target event corresponding to the first chip and the compensation signal are respectively level signals, the determination unit is configured to determine quantity information of predefined level signals in the target event detected on the communication bus and determine whether the target event detected on the communication bus meets the expectations of the first chip based on the quantity information of the predefined level signals and a predefined benchmark quantity information.

12. The control device according to claim 7, wherein the target event corresponding to the first chip is used to determine a connection state between the first chip and the host device,
and/or, wherein the target event corresponding to the first chip is used to determine a communication rate between the first chip and the host device.

13. A consumable, comprising:
a housing;
a developer accommodating portion, located in the housing, for accommodating a developer; and
a control device as described in any one of claims 7-12.

14. The consumable according to claim 13, further comprising: a developer conveying element for conveying the developer; and/or
a photosensitive drum; and a charging roller for charging the photosensitive drum.

15. A consumable, comprising:
a photosensitive drum;
a charging roller, used for charging the photosensitive drum; and
a control device described in any one of claims 7-12.
